# FASCICULE DE BREVET EUROPEEN

(11) **EP 2 641 697 B1**
(45) Date de publication et mention de la délivrance du brevet: **01.06.2016**
(21) Numéro de dépôt: 13305334.8
(22) Date de dépôt: 20.03.2013
(51) Int. Cl.: B23Q 3/08, B23Q 3/06, B25B 11/00, B25B 5/06

(54) **Outillage d'usinage pour cadre de fuselage d'aeronef**
Bearbeitungswerkzeug für Rumpfrahmen eines Luftfahrzeugs
Machining tool for aircraft fuselage frame

(30) Priorité: 23.03.2012 FR 1252614
(43) Date de publication de la demande: 25.09.2013
(73) Titulaire: Airbus Opérations SAS, 31060 Toulouse (FR)
(72) Inventeur: De Mattia, Denis, 44115 BASSE GOULAINE (FR)
(74) Mandataire: Fantin, Laurent

(56) Documents cités:
- WO-A2-2009/128007
- US-A- 4 805 887
- US-B1- 6 170 157

## Description

La présente invention se rapporte à un outillage d'usinage pour cadre de fuselage d'aéronef.

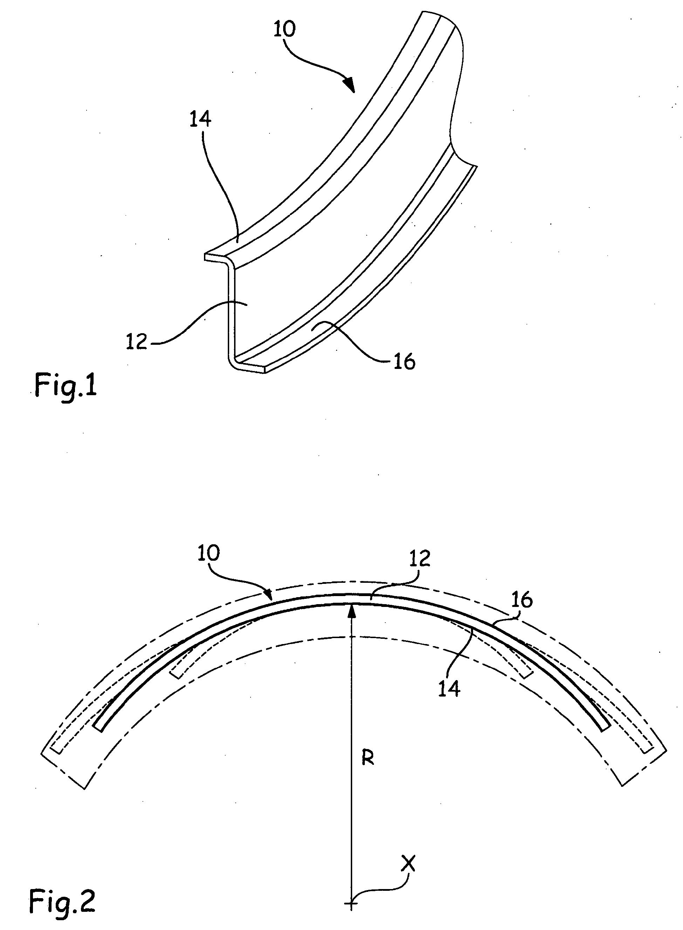

Comme illustré sur la figure 1, un cadre de fuselage 10 comprend un profilé avec une section en Z, dont la portion centrale appelée âme 12 forme un anneau complet ou partiel. Le profilé comprend une première aile 14 dite aile intérieure disposée au niveau du bord intérieur de l'âme 12 et perpendiculaire à cette dernière et une seconde aile 16 dite aile extérieure disposée au niveau du bord extérieur de l'âme 12, également perpendiculaire à cette dernière.

Ce profil en Z suit dans un plan contenant l'âme 12 un rayon de courbure. Ainsi, les deux ailes 14 et 16 correspondent approximativement à une portion de cylindre.

Comme illustré sur la figure 2, en fonction de sa position dans la structure du fuselage, un cadre peut être plus ou moins long et le rayon de courbure des ailes peut être plus ou moins prononcé. Ainsi, sur la figure 2, on a représenté en trait continu un exemple de cadre vu de face et en pointillés d'autres cadres avec des géométries différentes, également vus de face.

Selon un mode de réalisation, un cadre de fuselage d'aéronef peut être réalisé en matériau composite et comprendre des fibres de renforts noyées dans une matrice de résine.

Après polymérisation, un cadre de fuselage doit subir des opérations d'usinage consistant à détourer puis chanfreiner l'aile intérieure 14, à détourer l'aile extérieure 16, à percer l'âme 12 et enfin à couper les extrémités du cadre.

Pour réaliser ces usinages, le cadre de fuselage est solidarisé à un outillage disposé dans un poste d'usinage.

Pour permettre de réaliser les usinages en respectant les tolérances dimensionnelles, l'outillage comprend au moins une première surface de référence contre laquelle est plaquée l'une des faces de l'âme et au moins une seconde référence (surface ou butée) contre laquelle prend appui l'aile intérieure.

Selon une première variante, l'outillage comprend une première surface de référence contre laquelle peut prendre appui l'âme qui s'étend sur toute la longueur de l'âme et une seconde surface de référence contre laquelle prend appui l'une des faces de l'aile intérieure et qui s'étend sur toute la longueur de l'aile intérieure.

Le bridage du cadre sur l'outillage est obtenu par un bridage de type « ventouse ». Ainsi, les surfaces de référence comprennent des zones à dépression avec des joints pour maintenir plaquées l'âme et l'aile intérieure respectivement contre la première surface de référence et contre la seconde surface de référence.

Après le bridage du cadre à usiner, les différentes opérations d'usinage sont réalisées. A l'issue de l'usinage, l'opérateur désolidarise le cadre usiné de l'outillage et nettoie le poste d'usinage.

Pour procéder à l'usinage d'un autre cadre, si ce dernier à la même géométrie que le précédent, l'opérateur le bride sur le même outillage et relance une phase d'usinage. Si le cadre a une géométrie différente, il est nécessaire de démonter l'outillage afin d'installer un outillage adapté au cadre à réaliser.

Ainsi, selon cette première variante, il faut prévoir autant d'outillages qu'il y a de cadres différents. Ainsi, pour pouvoir usiner les cadres des différentes portions d'un fuselage d'un aéronef et cela pour toute la gamme d'aéronefs, il est nécessaire de disposer d'une centaine d'outillages différents ce qui impacte nécessairement les coûts de réalisation et de stockage des outillages. De plus, la multitude des outillages complexifie leur gestion.

Selon un autre inconvénient, la mise en place du cadre sur l'outillage s'avère problématique du fait qu'il est difficile de plaquer, de manière simultanée et sur toute la longueur du cadre, l'âme et l'aile intérieure respectivement contre la première surface de référence et contre la seconde surface de référence, la liaison entre le cadre et l'outillage étant hyperstatique.

Selon cette variante, chaque surface de référence comporte des zones isolées les unes des autres au niveau desquelles est activé le phénomène de dépression séquentiellement, au fur et à mesure de la mise en place.

Pour assurer une mise en place correcte sur toute la longueur, il faut que le cadre soit correctement positionné au niveau de la première zone activée. S'il n'est pas correctement positionné au départ, le défaut d'alignement s'amplifie sur la longueur.

Le positionnement du cadre sur l'outillage est d'autant plus difficile que les joints qui bordent les zones de dépression ont un coefficient de frottement important avec le cadre et limitent le glissement.

Selon une deuxième variante, la surface de référence de l'âme n'est pas réalisée d'un seul tenant. Ainsi, l'outillage comprend plusieurs blocs positionnés sur une table d'usinage horizontale, chacun comprenant une surface de référence prévue pour servir d'appui à l'âme.

Pour assurer le positionnement du cadre dans le plan de l'âme, l'âme est brochée sur l'un des blocs et l'aile intérieure prend appui localement contre au moins une butée solidaire d'un autre bloc.

Pour positionner correctement un cadre, il est nécessaire d'utiliser 3 à 7 blocs qui peuvent être réutilisés en les positionnant correctement pour les différentes géométries de cadres.

Selon cette variante, les blocs sont mis en place sur la table avec la tête du poste d'usinage et sont solidarisés à la table par un système de bridage de type « ventouse ». L'une des faces de l'âme du cadre est rapportée sur les surfaces de référence des différents blocs, puis le cadre est broché sur l'un des blocs. En suivant, l'une des faces de l'aile intérieure est mise en contact localement avec au moins une butée solidaire d'au moins un bloc. Enfin, le cadre est solidarisé aux blocs par un système de bridage de type « ventouse ».

Après usinage, le cadre est démonté.

Pour procéder à l'usinage d'un autre cadre, si ce dernier à la même géométrie que le précédent, l'opérateur le bride sur les blocs et relance une phase d'usinage. Si le cadre a une géométrie différente, il est nécessaire de repositionner les blocs sur la table.

Même si cette variante permet de réduire le nombre d'outillages, elle n'est pas pleinement satisfaisante pour les raisons suivantes :
- Dans la mesure où les blocs sont mis en place avec l'assistance de la tête du poste d'usinage pour les positionner correctement, leurs mises en place impactent la productivité du poste d'usinage. Celle-ci est d'autant plus impactée que selon cette variante, le nombre d'éléments d'outillage à positionner est plus important que pour la première variante.
- Les perçages à réaliser dans l'âme doivent être réalisés avec des vitesses d'avance réduites pour limiter les risques de délaminage du fait que pour les perçages situés en dehors des blocs, il n'existe aucune surface d'appui sur la périphérie des perçages pour reprendre les efforts de perçage. Par conséquent, la productivité est encore impactée.
- Selon un autre inconvénient, le fait d'utiliser une table d'usinage horizontale et de disposer le plan de l'âme dans un plan horizontal conduit à ce que les surfaces d'usinage soient polluées par le liquide de coupe ou les résidus issus de l'usinage.
- Comme pour la première variante, la mise en place du cadre sur les blocs s'avère difficile.
- En plus de la difficulté de mise en place, si l'opérateur force pour corriger le défaut d'alignement, le cadre à usiner peut être bridé sur les blocs avec des contraintes, notamment des contraintes de flexion entre les blocs. Or, si le cadre est usiné alors qu'il est contraint, il peut se déformer légèrement pour libérer les contraintes lorsqu'il est débridé. Suite à ces déformations, certaines tolérances dimensionnelles peuvent ne plus être respectées. Aussi, selon la deuxième variante, l'opération de chanfreinage doit être réalisée sur un autre poste, ce qui nuit à la productivité.

Le document WO 2009/128007 A2 divulgue un outillage selon le préambule de la revendication 1.

Aussi, la présente invention vise à remédier aux inconvénients de l'art antérieur en améliorant la productivité.

A cet effet, l'invention propose un outillage pour usiner un profilé courbe selon un axe de rotation, ledit profilé courbe comprenant au moins une première section dans un plan perpendiculaire à l'axe de rotation et au moins une deuxième section parallèle à l'axe de rotation, ledit outillage comprenant plusieurs blocs avec chacun une surface de bridage contre laquelle peut prendre appui le profilé, les blocs comprenant des moyens de positionnement contre lesquels prennent appui la première section et la deuxième section du profilé et des moyens pour immobiliser le profilé aptes à occuper un premier état activé dans lequel ils immobilisent le profilé et un second état désactivé dans lequel ils n'immobilisent pas le profilé, caractérisé en ce qu'il comprend des presses manuelles permettant de maintenir plaqué le profilé contre les moyens de positionnement jusqu'à ce que les moyens pour immobiliser le profilé soient à l'état activé.

Selon un avantage, l'utilisation de presse manuelle simplifie le positionnement de l'ébauche sur l'outillage ce qui tend à améliorer la productivité.

D'autres caractéristiques et avantages ressortiront de la description qui va suivre de l'invention, description donnée à titre d'exemple uniquement, en regard des dessins annexés sur lesquels :
- La figure 1 est une vue en perspective d'une partie d'un cadre de fuselage d'un aéronef,
- La figure 2 est une vue de face illustrant en trait fort un cadre d'un aéronef et en pointillés différentes variantes de cadres,
- La figure 3. est une représentation schématique d'un poste d'usinage équipé d'un outillage selon l'invention,
- La figure 4A est une représentation schématique en perspective d'un outillage selon l'invention vide,
- La figure 4B est une représentation schématique en perspective d'un outillage selon l'invention sur lequel est bridé un cadre,
- La figure 5 est une représentation schématique latérale d'un bloc selon une première variante, incorporé à un outillage selon l'invention,
- La figure 6 est une représentation schématique latérale d'un bloc selon une deuxième variante, incorporé à un outillage selon l'invention,
- La figure 7 est une représentation schématique d'un accessoire susceptible d'équiper un outillage selon l'invention, et
- La figure 8 est une représentation schématique d'un accessoire susceptible d'équiper une tête d'usinage utilisée pour percer un cadre bridé sur un outillage selon l'invention.

Sur la figure 1, on a représenté un cadre de fuselage 10 sous la forme d'un profilé avec une section en Z, dont la portion centrale appelée âme 12 forme un anneau complet ou partiel. Le profilé comprend une première aile 14 dite aile intérieure disposée au niveau du bord intérieur de l'âme 12 et perpendiculaire à cette dernière et une seconde aile 16 dite aile extérieure disposée au niveau du bord extérieur de l'âme 12, également perpendiculaire à cette dernière.

Pour donner un ordre de grandeur, l'âme a une hauteur de 80 mm, une épaisseur de l'ordre de 4 à 6 mm. Les ailes ont une largeur de l'ordre de 30 mm.

L'invention n'est pas limitée à cette forme de section et à cette application. Ainsi, l'invention peut permettre d'obtenir différents profilés courbes avec une section en J, en Z, en L, en Oméga ou autre.

Selon l'invention, le profilé 10 est courbe selon un axe de rotation X et un rayon de courbure R. Ainsi, le profilé courbe 10 comprend au moins une première section, plus particulièrement l'âme 12, dans un plan perpendiculaire à l'axe de rotation X et au moins une deuxième section, plus particulièrement l'aile 14, parallèle à l'axe X. Les différentes sections du profilé sont reliées entre elles par des sections courbes. Ainsi, une première surface d'une première section est continue avec une première surface de chaque autre section. Ces premières surfaces forment une surface dite par la suite surface extérieure. De la même manière, une seconde surface de la première section est continue avec une seconde surface de chaque autre section. Ces secondes surfaces forment une surface dite par la suite surface intérieure. Cette dernière comprend des parties orientées vers l'axe de rotation X.

Selon un mode de réalisation, ce cadre est réalisé en matériau composite. Cependant, l'invention n'est pas limitée à ce matériau.

Le cadre est obtenu à partir d'une ébauche 18 dans laquelle on réalise au moins un usinage au niveau d'un poste d'usinage 20.

Selon un mode opératoire, les opérations d'usinage consistent à détourer puis chanfreiner l'aile intérieure 14, à détourer l'aile extérieure 16, à percer l'âme 12 et enfin à couper les extrémités du cadre.

Le poste d'usinage 20 comprend au moins une tête d'usinage 22 équipée d'au moins un outil 24. La tête d'usinage, le ou les outils ainsi que les moyens pour gérer les déplacements de la tête ne sont pas plus décrits car ils peuvent être identiques à ceux utilisés pour la première variante de l'art antérieur.

Pour maintenir et positionner l'ébauche 18, le poste d'usinage 20 comprend au moins un outillage 26.

Cet outillage comprend au moins une surface de référence 28 sur laquelle sont rapportés plusieurs blocs 30.1 ou 30.2, chaque bloc comportant deux surfaces parallèles, une première surface de contact 32 plaquée contre la surface de référence 28 et une deuxième surface de bridage 34 contre laquelle peut prendre appui l'ébauche 18.

Selon une première option privilégiée, la surface de référence 28 est verticale. Cette solution permet d'éviter que les surfaces usinées soient polluées par un liquide de coupe ou des résidus issus de l'usinage. De plus, cette solution assure un meilleur engagement de la tête d'usinage.

De préférence, l'une des faces de l'âme 12 est plaquée contre les surfaces de bridage 34 des différents blocs 30.1 ou 30.2 car l'âme 12 offre une plus grande surface plane. De plus, cet agencement permet d'éviter que les surfaces au niveau desquelles sont réalisés les perçages soient polluées par un liquide de coupe ou des résidus issus de l'usinage. Selon un autre avantage, cette configuration assure un meilleur engagement de la tête d'usinage.

Selon un mode de réalisation, les blocs 30.1 ou 30.2 sont immobilisés sur la table par un système de bridage par aimantation. Selon un mode de réalisation, la surface de référence 28 est métallique et chaque bloc 30.1 ou 30.2 comprend un aimant non permanent 36 affleurant au niveau de la surface de contact 32, activé par une commande (non représentée). D'autres moyens pourraient être envisagés pour immobiliser les blocs 30.1 ou 30.2 sur la surface de référence 28, comme par exemple un système de bridage par ventouse.

Pour la suite de la description, on entend par plan de référence, un plan parallèle à la surface de référence 28. Si cette surface n'est pas totalement plane, la surface moyenne définie par les zones planes contre lesquelles sont plaqués les blocs 30.1 ou 30.2 constitue un plan de référence.

Selon un point important de l'invention, chaque bloc 30.1 ou 30.2 comprend un moyen d'indexage permettant de le positionner dans le plan de référence.

Ces moyens d'indexage permettent de pouvoir positionner les blocs sans recourir à la tête d'usinage comme pour l'art antérieur. Cette solution permet également de faciliter la mise en place des blocs sur la surface de référence 28.

De préférence, ces moyens d'indexage comprennent pour chaque bloc une forme en saillie 38 (ou en creux) qui coopère avec une forme en creux 40 (ou en saillie) afin que le bloc soit immobilisé dans le plan de référence.

Cette solution peut permettre un maintien des blocs sur la surface de référence même si cette surface est disposée verticalement.

Avantageusement, la forme en saillie 38 et la forme en creux 40 sont de révolution afin de permettre aux blocs de pouvoir pivoter autour d'un axe perpendiculaire à la surface de référence.

Selon un mode de réalisation, la forme en saillie 38 se présente sous la forme d'un cylindre avec un diamètre D et un axe perpendiculaire à la surface de contact 32. En complément, la forme en creux 40 se présente sous la forme d'un trou cylindrique avec un diamètre égal à D au jeu de pivotement près avec une profondeur permettant de loger totalement la forme en saillie 38 et un axe perpendiculaire à la surface de référence 28.

Avantageusement, la forme en saillie 38 est prévue au niveau du bloc 30.1 ou 30.2 et la forme en creux 40 au niveau de la surface de référence 28.

L'outillage comprend au moins deux blocs pour brider une ébauche 18. Selon un mode de réalisation, l'outillage comprend de 3 à 7 blocs pour brider une ébauche. Pour rendre l'outillage modulable, la surface de référence comprend pour chaque bloc, plusieurs formes en creux 40 afin de pouvoir adapter l'outillage à la courbure du cadre.

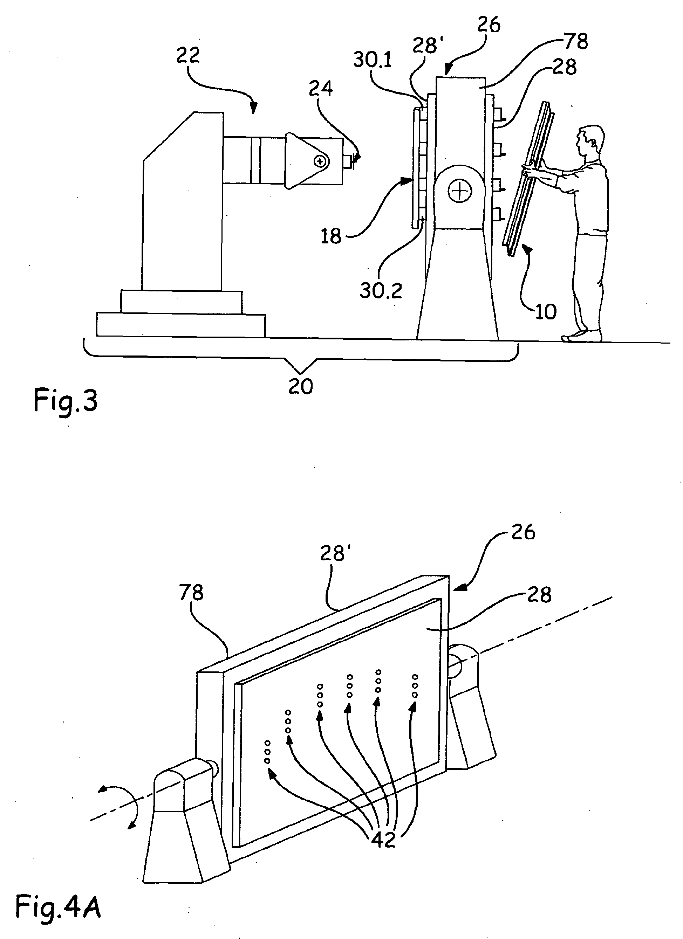

Selon le mode de réalisation illustré sur la figure 4A, pour brider les cadres les plus longs, l'outillage comprend six blocs. Pour chaque bloc, la surface de référence 28 comprend une série 42 de formes en creux 40, les formes en creux d'une même série étant disposées selon une ligne, les lignes des différentes séries étant parallèles entre elles et orientées verticalement.

De préférence, les séries 42 sont disposées de manière symétriques par rapport à un axe médian vertical de la surface de référence. Cette configuration permet d'équilibrer la reprise des efforts.

Selon un mode de réalisation, la surface de référence 28 comprend six séries 42, avec chacune trois formes en creux 40.

Certains blocs 30.1 ou 30.2, et de préférence tous, comprennent chacun un moyen de positionnement de l'ébauche à usiner.

Selon une caractéristique de l'invention, chaque moyen de positionnement de l'ébauche se présente sous la forme d'un cylindre 46.1 ou 46.2, solidaire du bloc 30.1 ou 30.2 et faisant saillie par rapport à la surface de bridage, avec un axe perpendiculaire à la surface de bridage 34 et coaxial avec la forme en saillie 38 servant à indexer le bloc 30.1 ou 30.2 sur la surface de référence 28.

Cet agencement permet de s'affranchir de l'orientation des blocs, ce qui simplifie leurs positionnements sur la surface de référence 28 et limite le temps d'intervention des opérateurs.

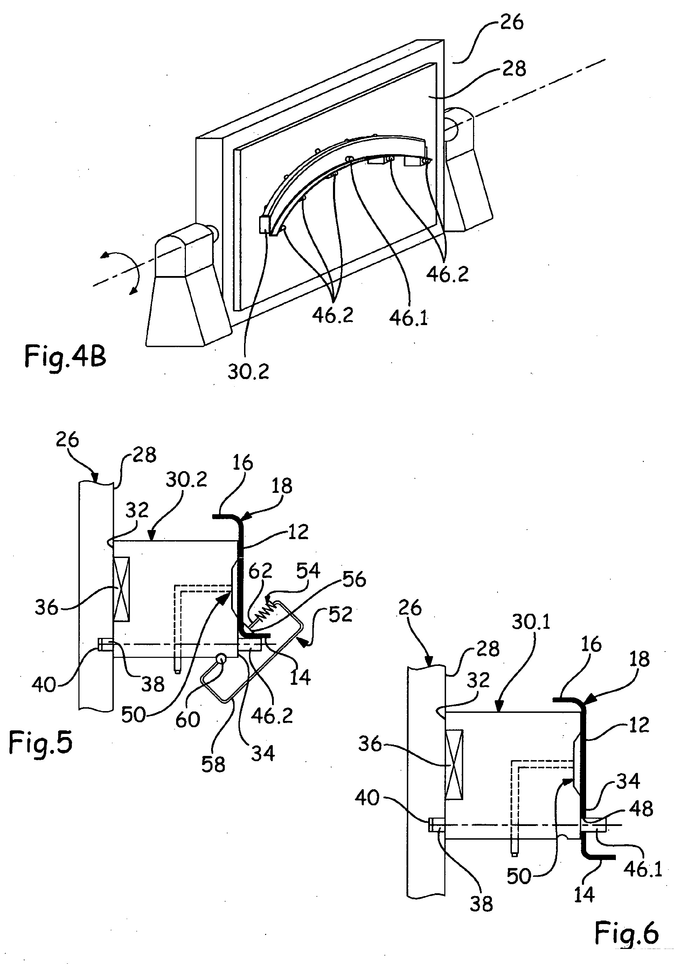

Selon un mode de réalisation illustré sur la figure 6, un bloc 30.1 comprend un cylindre 46.1 susceptible de se loger dans un orifice 48 prévu au niveau de l'ébauche, l'orifice 48 ayant un diamètre sensiblement identique à celui du cylindre 46.1.

Selon un mode de réalisation illustré sur la figure 5, les autres blocs 30.2 comprennent chacun un cylindre 46.2 qui assure la fonction de butée et contre lequel peut prendre appui l'aile intérieure 14. Ces autres butées permettent d'orienter l'ébauche et de positionner correctement l'aile intérieure.

Chaque bloc 30.1 ou 30.2 comprend des moyens pour immobiliser l'ébauche aptes à occuper un premier état activé dans lequel ils immobilisent l'ébauche et un second état désactivé dans lequel ils n'immobilisent pas l'ébauche. Selon un mode de réalisation, chaque bloc 30.1 ou 30.2 comprend un système 50 de bridage de type « ventouse ». Toutefois, l'invention n'est pas limitée à ce moyen d'immobilisation.

Selon une caractéristique de l'invention, les blocs 30.2 comprennent chacun au moins une presse manuelle 52 permettant de maintenir plaquée l'ébauche 18 contre les moyens de positionnement, et notamment l'âme 12 contre la surface de bridage 34 et/ou l'aile intérieure 14 contre le cylindre 46.2, jusqu'à ce que les moyens pour immobiliser soient activés.

Selon un avantage, l'utilisation de presse manuelle simplifie le positionnement de l'ébauche sur l'outillage, ce qui tend à améliorer la productivité.

Selon un point important, une presse manuelle 52 comprend un moyen d'amortissement 54 sous forme d'un ressort qui permet d'assurer un effort taré. Ainsi, selon l'invention, l'ébauche 18 est pré-positionnée sur tous les blocs avec les différentes presses manuelles 52 avant d'être immobilisée avec les différents systèmes 50 de bridage de type « ventouse». Selon un avantage, les presses manuelles 52 autorisent un léger glissement de la section de l'ébauche 18 sur les blocs 30.1 ou 30.2 contrairement à un système 50 de bridage de type « ventouse ». De plus, les moyens d'amortissement 54 des presses manuelles 52 permettent de solidariser l'ébauche 18 sur la surface de référence en équilibrant les efforts de serrage sur tous les blocs.

Ainsi, les presses manuelles 52 permettent de limiter les déformées parasites du cadre et donc de respecter les tolérances dimensionnelles.

Selon un mode de réalisation, chaque presse manuelle 52 comprend au moins un point de contact 56 avec une forme arrondie susceptible de prendre appui au niveau du rayon de courbure reliant l'âme 12 à l'aile intérieure 14. Cet agencement permet avec un seul point de contact de plaquer l'âme et l'aile intérieure.

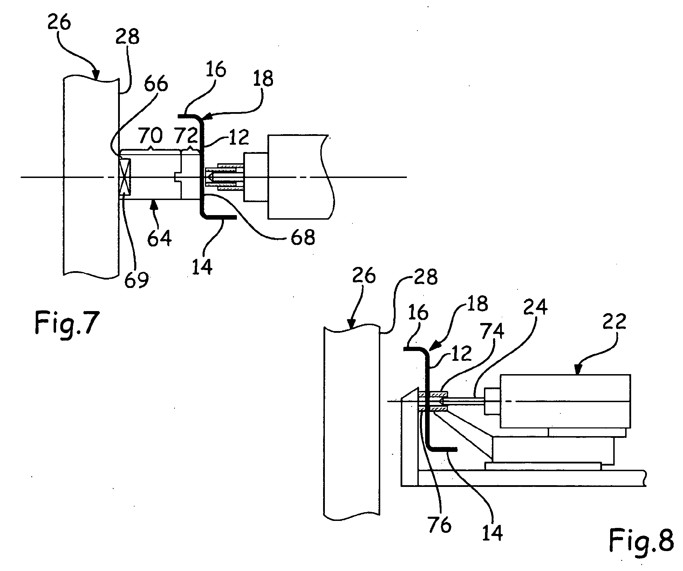

Selon un mode de réalisation, chaque presse manuelle comprend un corps 58 avec une forme en C, une première extrémité 60 étant en contact avec le bloc 30.2, l'autre extrémité 62 supportant le point de contact 56, le moyen d'amortissement 54 étant intercalé entre le point de contact 56 et le corps 58. Selon un mode de réalisation, la première extrémité 60 peut se loger dans un cran prévu au niveau d'une face latérale du bloc 30.2. Selon d'autres variantes, la première extrémité pourrait être articulée par rapport au bloc 30.2. Avantageusement, l'outillage comprend des plots de perçage 64 dont un exemple est illustré sur la figure 7. Chaque plot de perçage 64 comprend deux surfaces parallèles, une première surface de contact 66 plaquée contre la surface de référence 28 et une seconde surface de contact 68 contre laquelle peut prendre appui l'ébauche 18. Les blocs et les plots ont la même hauteur de manière à ce que l'âme de l'ébauche puisse être en contact avec les surfaces de bridage 34 et les surfaces de contact 68. Les plots de perçage 64 sont disposés dans le prolongement de l'axe de chaque perçage situé dans des zones non en contact avec un bloc et constituent un contre-appui permettant d'éviter le délaminage de l'ébauche. Cet agencement contribue à améliorer la productivité.

Selon un mode de réalisation, les plots de perçage 64 peuvent être cylindriques. Avantageusement, ils offrent chacun une surface de contact 68 contre laquelle peut prendre appui l'ébauche tout autour d'un trou de perçage.

Chaque plot de perçage 64 comprend un système de bridage par aimantation pour l'immobiliser sur la surface de référence 28. Selon un mode de réalisation, la surface de référence 28 est métallique et chaque plot de perçage 64 comprend un aimant non permanent 69 affleurant au niveau de la surface de contact 66, activé par une commande (non représentée). D'autres moyens pourraient être envisagés pour immobiliser les plots de perçage 64 sur la surface de référence 28, comme par exemple un système de bridage par ventouse.

De préférence, chaque plot de perçage comprend deux parties reliées de manière démontable, une première partie en contact avec la surface de référence qui forme un corps 70 du plot de perçage 64 et une seconde partie susceptible d'être en contact avec l'ébauche qui forme un embout 72 dit « martyr » susceptible d'être changé.

En variante ou en complément des plots de perçage 64, comme illustré sur la figure 8, l'outil de perçage peut supporter un appui 74 et un contre-appui 76 disposés de part et d'autre de l'âme.

Selon toutes les variantes, l'outillage comprend au moins un contre-appui contre lequel peut prendre appui la face du cadre opposée à la face au niveau de laquelle pénètre l'outil lors d'un perçage, ledit contre-appui étant fixe ou mobile et disposé dans le prolongement de l'outil lors du perçage de manière à reprendre les efforts de coupe et limiter les risques de délaminage.

Selon une autre caractéristique de l'invention, le poste d'usinage comprend plusieurs surfaces de référence 28, notamment deux permettant à un opérateur de débrider un cadre usiné et de brider une ébauche à usiner sur une première surface de référence pendant qu'une ébauche est usinée sur une seconde surface de référence.

Selon un mode de réalisation illustré sur les figures 3, 4A et 4B, le poste d'usinage comprend une table pivotante 78 autour d'un axe horizontal, ladite table comprenant deux faces opposées sur lesquelles sont prévues respectivement une première surface de référence 28 et une seconde surface de référence 28'. Selon ce mode de réalisation, pendant que l'opérateur désinstalle un cadre usiné et installe une ébauche à usiner sur une première surface de référence 28, les différents usinages sont réalisés sur une ébauche bridée sur la seconde surface de référence 28' faisant face à l'outil ou aux outils.

Lorsque les différents usinages sont terminés, la table 78 pivote de manière à disposer la première surface de référence 28 en face du ou des outils. L'opérateur peut désinstaller le cadre usiné qui est bridé sur la seconde surface de référence afin d'y installer une ébauche à usiner.

En variante, le poste d'usinage peut comprendre deux tables fixes avec chacune une surface de référence. Dans ce cas, la machine-outil peut être disposée dans une zone disposée en face d'une première table pour usiner une ébauche bridée sur cette première table. Pendant le temps d'usinage, l'opérateur peut désinstaller un cadre usiné sur la seconde table et y installer une ébauche à usiner. Lorsque les usinages sur le cadre bridé sur la première table sont réalisés, la machine-outil ou la seconde table se translate de manière à ce que la machine-outil et la seconde table soient disposées en vis-à-vis. L'ébauche bridée sur la seconde table est usinée alors que l'opérateur peut désinstaller le cadre usiné sur la première table et y installer une ébauche à usiner.

Le fonctionnement de l'outillage selon l'invention est le suivant :
Dans un premier temps, l'opérateur installe les différents blocs sur la surface de référence. Un pointeur laser peut l'aider à déterminer le trou dans chaque série 44 dans lequel doit être positionné un bloc en fonction de la géométrie (rayon de courbure, longueur) du cadre à réaliser. L'opérateur active ensuite l'électroaimant de chaque bloc. Selon l'invention, les blocs n'ont pas besoin d'être orientés angulairement, ce qui tend à raccourcir et à simplifier la mise en place des blocs et donc à améliorer la productivité.

En suivant, l'opérateur pré-positionne l'ébauche à usiner sur les différents blocs. A cet effet, il positionne le cylindre 46.1 du bloc 30.1 dans l'orifice 48 prévu au niveau de l'ébauche. En suivant, pour chaque bloc 30.2, il plaque l'âme et l'aile intérieure contre la surface de bridage du bloc et contre le cylindre 46.2 puis il met en place la presse manuelle 52. Lorsque toutes les presses manuelles des différents blocs 30.2 sont mises en place, l'opérateur peut activer les systèmes 50 de bridage de type « ventouse » des blocs 30.2. L'ébauche à usiner est de la sorte parfaitement bridée sur l'outillage. L'opérateur peut retirer les presses manuelles et lancer l'usinage.

L'outillage permet de limiter les contraintes internes. Ainsi, les usinages sont réalisés en respectant les tolérances dimensionnelles du fait que le bridage n'induit pas de déformations parasitaires grâce à l'utilisation des presses manuelles.

Le fait de disposer de deux surfaces de référence permet d'améliorer la productivité du fait que le cadre usiné peut être désinstallé et qu'une nouvelle ébauche peut être installée en temps masqué.

Enfin, l'utilisation d'un contre appui permet de limiter les risques de délaminage et d'augmenter les vitesses d'avance, ce qui contribue à améliorer la productivité.

## Revendications

1. Outillage pour usiner un profilé (10) courbe selon un axe de rotation X, ledit profilé (10) courbe comprenant au moins une première section (12) dans un plan perpendiculaire à l'axe de rotation X et au moins une deuxième section (14) parallèle à l'axe de rotation X, ledit outillage comprenant plusieurs blocs (30.1, 30.2) avec chacun une surface de bridage (34) contre laquelle peut prendre appui le profilé (10), les blocs (30.1, 30.2) comprenant des moyens de positionnement contre lesquels prennent appui la première section (12) et la deuxième section (14) du profilé (10) et des moyens pour immobiliser le profilé (10) aptes à occuper un premier état activé dans lequel ils immobilisent le profilé (10) et un second état désactivé dans lequel ils n'immobilisent pas le profilé (10), **caractérisé en ce qu'**il comprend des presses manuelles (52) permettant de maintenir plaqué le profilé (10) contre les moyens de positionnement jusqu'à ce que les moyens pour immobiliser le profilé (10) soient à l'état activé.

2. Outillage selon la revendication 1, **caractérisé en ce que** chaque presse manuelle (52) comprend un corps (58) avec une première extrémité (60) en contact avec le bloc (30.2) et un point de contact (56) à une deuxième extrémité, un moyen d'amortissement (54) étant intercalé entre le point de contact (56) et le corps (58).

3. Outillage selon la revendication 2, **caractérisé en ce que** le point de contact (56) prend appui au niveau d'une zone de jonction reliant la première section (12) et la deuxième section (14).

4. Outillage selon la revendication 2 ou 3, **caractérisé en ce qu'**un bloc (30.2) comprend un cran apte à loger la première extrémité (60) d'une presse manuelle (52).

5. Outillage selon l'une quelconque des revendications précédentes, **caractérisé en ce que** des blocs (30.1, 30.2) comprennent chacun d'une part un moyen de positionnement du profilé (10) sous forme d'un cylindre (46.1, 46.2), faisant saillie par rapport à la surface de bridage (34), avec un axe perpendiculaire à la surface de bridage (34) et d'autre part des moyens d'indexage (38, 40) dans un plan de référence, les moyens d'indexage étant de révolution afin de permettre à chacun desdits blocs de pivoter par rapport à un axe perpendiculaire au plan de référence et coaxial avec l'axe du cylindre (46.1, 46.2) du moyen de positionnement.

6. Outillage selon la revendication 5, **caractérisé en ce que** les moyens d'indexage comprennent pour chaque bloc (30.1, 30.2) une forme en saillie (38) au niveau du bloc qui coopère avec une forme en creux (40) ménagée au niveau d'une surface de référence (28).

7. Outillage selon la revendication 6, **caractérisé en ce que** la surface de référence (28) comprend plusieurs séries de formes en creux (40), les formes en creux d'une même série étant disposées selon une ligne, les lignes des différentes séries étant parallèles entre elles.

8. Outillage selon la revendication 6 ou 7, **caractérisé en ce qu'**il comprend plusieurs surfaces de référence.

9. Outillage selon l'une quelconque des revendications 6 à 8, **caractérisé en ce que** la ou les surfaces de référence sont disposées chacune dans un plan vertical.

10. Outillage selon l'une quelconque des revendications précédentes, **caractérisé en ce qu'**il comprend au moins un contre-appui contre lequel peut prendre appui la face de la première section (12) opposée à la face au niveau de laquelle pénètre un outil.

11. Outillage selon la revendication 10, **caractérisé en ce qu'**il comprend des plots de perçage (64) en deux parties reliées de manière démontable, une première partie (70) en contact avec la surface de référence (28) et une seconde partie en contact avec le profilé susceptible d'être changée.

## Patentansprüche

1. Werkzeug zum Bearbeiten eines in Bezug auf eine Drehachse X gekrümmten Profils (10), wobei das gekrümmte Profil (10) wenigstens einen ersten, in einer Ebene im rechten Winkel zur Drehachse X gelegenen Abschnitt (12) und wenigstens einen zweiten, zur Drehachse X parallelen Abschnitt (14) aufweist und wobei das Werkzeug mehrere Blöcke (30.1, 30.2) mit jeweils einer Spannoberfläche (34) aufweist, gegen die sich das Profil (10) abstützen kann, wobei die Blöcke (30.1, 30.2) Positioniermittel aufweisen, gegen die sich der erste Abschnitt (12) und der zweite Abschnitt (14) des Profils (10) abstützen können, und Mittel zum Fixieren des Profils (10) aufweist, die dazu eingerichtet sind, einen ersten aktivierten Zustand einzunehmen, in dem diese das Profil (10) fixieren, und einen deaktivierten zweiten Zustand einzunehmen, in dem diese das Profil (10) nicht fixieren, **dadurch gekennzeichnet, dass** das Werkzeug Handpressmittel (52) umfasst, die es gestatten, das Profil (10) gegen die Positioniermittel gepresst zu halten, bis die Mittel zum Fixieren des Profils (10) im aktivierten Zustand sind.

2. Werkzeug nach Anspruch 1, **dadurch gekennzeichnet, dass** jedes Handpressmittel (52) einen Körper (58) mit einem ersten Ende (60) in Kontakt mit dem Block (30.2) und einen Kontaktpunkt (56) an einem zweiten Ende aufweist, wobei ein Dämpfungselement (54) zwischen den Kontaktpunkt (56) und den Körper (58) eingebracht ist.

3. Werkzeug nach Anspruch 2, **dadurch gekennzeichnet, dass** sich der Kontaktpunkt (56) im Bereich eines Verbindungsbereichs abstützt, der den ersten Abschnitt (12) und den zweiten Abschnitt (14) verbindet.

4. Werkzeug nach Anspruch 2 oder 3, **dadurch gekennzeichnet, dass** ein Block (30.2) einen Anschlag aufweist, der dazu eingerichtet ist, das erste Ende (60) eines Handpressmittels (52) aufzunehmen.

5. Werkzeug nach einem der vorhergehenden Ansprüche, **dadurch gekennzeichnet, dass** die Blöcke (30.1, 30.2) jeweils einerseits ein Positioniermittel für das Profil (10) in der Gestalt eines Zylinders (46.1, 46.2) aufweisen, der bezüglich der Spannoberfläche (34) vorspringt und über eine Achse im rechten Winkel zur Oberfläche der Spannoberfläche (34) verfügt, und andererseits in einer Bezugsebene Indexierungsmittel (38, 40) aufweisen, wobei die Indexierungsmittel drehbar sind, um jedem der Blöcke ein Verschwenken bezüglich einer Achse zu gestatten, die rechtwinklig zur Bezugsebene und koaxial mit der Achse des Zylinders (46.1, 46.2) des Positioniermittels ausgerichtet ist.

6. Werkzeug nach Anspruch 5, **dadurch gekennzeichnet, dass** die Indexierungsmittel für jeden Block (30.1, 30.2) eine vorspringende Form (38) im Bereich des Blocks aufweisen, der mit einer vertieften Form (40) zusammenwirkt, die im Bereich einer Referenzoberfläche (28) ausgebildet ist.

7. Werkzeug nach Anspruch 6, **dadurch gekennzeichnet, dass** die Bezugsoberfläche (28) mehrere Reihen von vertieften Formen (40) aufweist, wobei die vertieften Formen einer Reihe entlang einer Linie angeordnet sind und die Linien verschiedener Reihen untereinander parallel sind.

8. Werkzeug nach Anspruch 6 oder 7, **dadurch gekennzeichnet, dass** dieses mehrere Bezugsflächen aufweist.

9. Werkzeug nach einem der Ansprüche 6 bis 8, **dadurch gekennzeichnet, dass** die Bezugsfläche oder -flächen jeweils in einer vertikalen Ebene angeordnet sind.

10. Werkzeug nach einem der vorhergehenden Ansprüchen, **dadurch gekennzeichnet, dass** dieses wenigstens ein Gegenlager aufweist, gegen das sich die Seite des ersten Abschnitts (12) abstützen kann, die der Seite entgegengesetzt ist, in deren Bereich ein Werkzeug eindringt.

11. Werkzeug nach Anspruch 10, **dadurch gekennzeichnet, dass** dieses Bohrstützen (64) aus zwei Teilen umfasst, die auf zerlegbare Weise verbunden sind, wobei ein erster Teil (70) mit der Bezugsfläche (28) in Kontakt steht und ein zweiter Teil, der in Kontakt mit dem Profil steht, austauschbar ist.

## Claims

1. Tool for machining a curved profile (10) along an axis of rotation X, said curved profile (10) comprising at least one first section (12) along a plane perpendicular to the axis of rotation X and at least one second section (14) parallel to the axis of rotation X, said tool comprising blocks (30.1, 30.2), each having a clamping surface (34) against which the profile (10) can take support, the blocks (30.1, 30.2) comprising positioning means against which the first section (12) and the second section (14) of the profile (10) can take support, and means for immobilizing the profile (10) adapted to occupy a first activated state, wherein they immobilize the profile (10), and a second deactivated state, wherein they do not immobilize the profile (10), **characterized in that** it comprises manual presses (52) for maintaining the profile (10) flattened against the positioning means until the means for immobilizing the profile (10) are in the activated state.

2. Tool according to claim 1, **characterized in that** each manual press (52) comprises a body (58) with a first end (60) in contact with the block (30.2) and a contact point (56) at a second end, a damping means (54) being sandwiched between the contact point (56) and the body (58).

3. Tool according to claim 2, **characterized in that** the contact point (56) takes support in the area of a junction zone connecting the first section (12) and the second section (14).

4. Tool according to claim 2 or 3, **characterized in that** a block (30.2) comprises a notch adapted to house the first end (60) of a manual press (52).

5. Tool according to any of the previous claims, **characterized in that** each of the blocks (30.1, 30.2) comprises, on the one hand, a means for positioning the profile (10) in the form of a cylinder (46.1, 46.2), projecting with respect to the clamping surface (34), with an axis perpendicular to the clamping surface (34), and on the other hand, indexing means (38, 40) along a reference plane, the indexing means having a cylindrical form so as to enable each of said blocks to pivot with respect to an axis perpendicular to the reference plane and coaxial with the axis of the cylinder (46.1, 46.2) of the positioning means.

6. Tool according to claim 5, **characterized in that** the indexing means comprise for each block (30.1, 30.2) a projecting form (38) in the area of the block which cooperates with a hollow form (40) housed in the area of a reference surface (28).

7. Tool according to claim 6, **characterized in that** the reference surface (28) comprises several series of hollow forms (40), the hollow forms of the same series being arranged along a line, the lines of the different series being parallel to one another.

8. Tool according to claim 6 or 7, **characterized in that** it comprises several reference surfaces.

9. Tool according to any of claims 6 to 8, **characterized in that** the reference surface or surfaces are each arranged along a vertical plane.

10. Tool according to any of the previous claims, **characterized in that** it comprises at least one counter-support against which the surface of the first section (12) opposite the surface in the area of which a tool penetrates can take support.

11. Tool according to claim 10, **characterized in that** it comprises piercing studs (64) in two parts connected in a dismountable manner, a first part (70) in contact with the reference surface (28) and a second part in contact with the profile and capable of being changed.
